(19) Europäisches Patentamt
European Patent Office
Office européen des brevets

(11) **EP 1 433 264 B1**

(12) **EUROPEAN PATENT SPECIFICATION**

(45) Date of publication and mention
of the grant of the patent:
**09.12.2009 Bulletin 2009/50**

(21) Application number: **02764907.8**

(22) Date of filing: **04.10.2002**

(51) Int Cl.:
*H04B 1/59* (2006.01)  *G01S 13/75* (2006.01)

(86) International application number:
**PCT/FI2002/000781**

(87) International publication number:
**WO 2003/036807 (01.05.2003 Gazette 2003/18)**

(54) **METHOD FOR IMPROVING THE PERFORMANCE OF AN RFID TRANSPONDER**

VERFAHREN ZUM VERBESSERN DER LEISTUNGSFÄHIGKEIT EINES RFID-TRANSPONDERS

PROCEDE D'AMELIORATION DE LA PERFORMANCE D'UN TRANSPONDEUR RFID

(84) Designated Contracting States:
**AT BE BG CH CY CZ DE DK EE ES FI FR GB GR IE IT LI LU MC NL PT SE SK TR**

(30) Priority: **04.10.2001 FI 20011943**

(43) Date of publication of application:
**30.06.2004 Bulletin 2004/27**

(73) Proprietor: **Atmel Automotive GmbH**
**74072 Heilbronn (DE)**

(72) Inventors:
• **JAAKKOLA, Olli**
**FIN-00520 Helsinki (FI)**
• **VARPULA, Timo**
**FIN-01660 Vantaa (FI)**
• **SEPPÄ, Heikki**
**FIN-00370 Helsinki (FI)**

(74) Representative: **Müller, Wolf-Christian et al**
**Koch Müller**
**Patentanwaltsgesellschaft mbH**
**Maaßstrasse 32/1**
**69123 Heidelberg (DE)**

(56) References cited:
**EP-A2- 0 853 392**   **GB-A- 2 308 947**
**US-A- 5 912 632**   **US-B1- 6 282 407**

## Description

The invention relates to a method according to the preamble of claim 1 for improving the performance of an RFID transponder system.

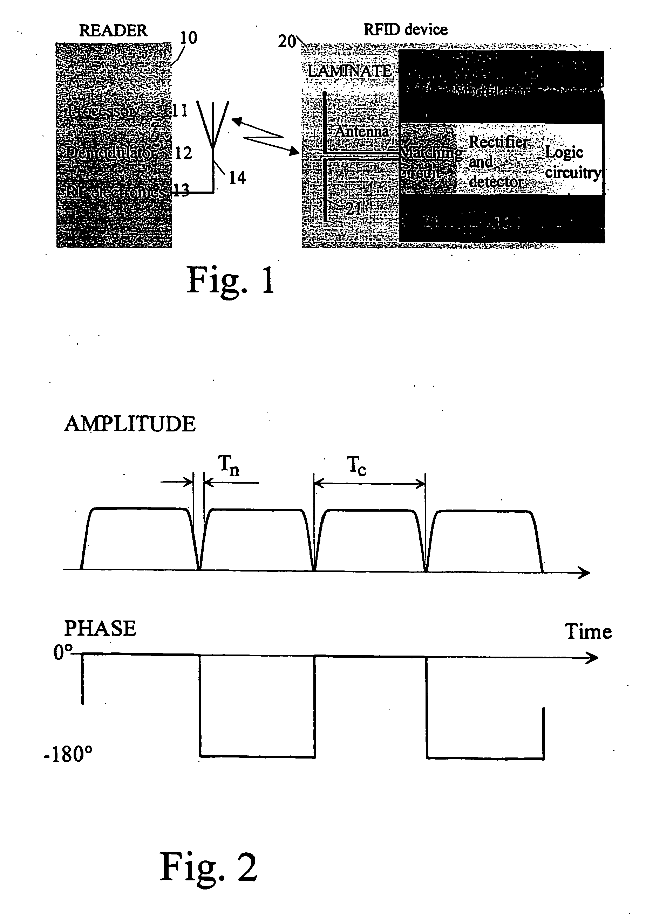

Generally, a remote identification device (such as an RFID transponder) is a miniature tag device comprising an antenna connected to a microcircuit with a memory that can respond by sending the contents of its memory by backscatter communications responsive to an interrogation signal received from an interrogating reader device when the transponder of the tag device is scanned by an RF signal emitted by the reader (refer to FIG.1). A passive RFID transponder has no battery, but instead it captures its operating power from the radio-frequency field of the interrogation signal sent toward its direction by the reader device. Energy and information transfer between the remote identification device and the reader device may take place using a magnetic field, an electric field or an emitted radio-frequency signal. In many applications of the remote identification device technology, it is important that the distance from the reader device to the transponder can be made long-preferably up to several meters. For this purpose, it is essential to keep the power consumption of the remote identification device circuitry as low as possible.

Inasmuch as the RFID transponder is responsive to the incident interrogation signal of the reader device by backscattering the RF signal emitted by the reader device, the response signal of the remote identification device is very weak. Hence, it is essential to achieve a maximally high signal-to-noise ratio and immunity to spurious signals in the communication between the remote identification device and the reader.

Authority regulations on maximum permissible signal power levels and frequencies form the crucial confines of remote identification technology. In Europe, for instance, it is allowable to emit signals at a power level of 0.5 W (ERP) within a frequency band of 869.4 - 869. 65 MHz. The communications may take place using a signal bandwidth of max. 250 kHz at 10 % duty rate. As a passive remote identification device must generate its operating voltages and power from the incident RF signal received from the reader device, the remote identification device is operative only at the instant the reader sends the interrogating RF signal. Therefore, the frequency and power intensity of the radio-frequency signal sent by the reader device must be carefully optimized in order to assure reliable function of the remote identification device.

High signal-to-noise ratio and immunity to spurious signals in signal transmission between the reader device and the remote identification device can be attained by using a synchronous communications technique. A prerequisite for synchronous information transfer is that the clocks of the system are synchronized with each other. These kinds of remote identification device systems are already known in the art. When operating at 13.56 MHz frequency band, the remote identification device may directly derive its clock signal by division from the carrier signal frequency.

This arrangement, however, requires that the remote identification device chip includes high-speed logic circuits that are power-hungry. Resultingly, the maximum read distance remains short.

The GB 2 308 947 discloses an identification tag being energized by a radio signal from a reader station to transmit a coat identifying the tag.

The US 5 912 632 A discloses a RF tag oscillator having an oscillation frequency set by a RF signal from a base station.

The EP 0 853 392 discloses sub carrier frequency division multiplexing of modulated signals, wherein a modulated carrier signal is generated by modulating a first information signal onto a radio signal.

The US 6 282 407 B1 discloses an active electrostatic device having a clock extractor that extracts a clock from the incoming data signal.

It is an object of the present invention to provide an entirely novel type of method and system capable of overcoming the above-described problems of the prior art.

The goal of the invention is achieved by way of using a reader device that sends the remote identification device a radio-frequency signal whose modulation is used to generate a clock signal in the remote identification device. Advantageously, the phase and amplitude of the radio-frequency signal emitted in the system is modulated so that the power level of the emitted signal level is kept almost continuous and its spectrum limited to the allocated bandwidth, whereby the remote identification device is adapted to generate its time reference signal from the modulation information of the incident signal. In practice, the modulation of the carrier is such that the carrier signal amplitude is at its maximum permissible level, but at certain intervals the amplitude is reduced, whereby also the phase of the carrier signal is reversed by about 180°. The invention is also suited for use in a remote sensor based on the remote identification technology. The invention is equally well suited for use remote identification device or remote sensor systems based on communication by a magnetic field, an electric field or an emitted radio-frequency signal.

More specifically, the method according to the invention is characterized by what is stated in the characterizing part of claim 1.

The invention offers significant benefits.

By virtue of the invention, a remote identification system can be improved in plural ways: the remote identification device becomes simpler and its power consumption is reduced inasmuch as it can operate with no clock at all or, alternatively, the clock circuit of the device may be optimized for minimal power consumption hence also being less accurate, since the clock synchronization takes place at the reception of the interrogation signal sent by the reader device. As both the reader and the remote identification device are thus synchronized to the same clock, their mutual signal transmission occurs in a synchronized fashion. The benefit gained by synchronous information transmission is a substantially improved signal-to-noise ratio over that of asynchronous transmission. Furthermore, synchronous transmission is also essentially more immune to spurious RF signals emitted by external sources. This is a crucial advantage in the case that plural reader devices, for instance, are used simultaneously at a close distance from each other for interrogating remote identification devices. By virtue of the almost continuous transmission power of the interrogation signal, the system offers long read distances.

Remote identification devices will in many cases replace such identification techniques as optically scanned barcode labels, for instance. This is because remote identification devices offer many benefits such as easy rewrite of their memory content, no need for a visual contact to the remote identification device being interrogated by means of an RF signal, a read distance of several meters and more.

In the following, the invention will be examined in greater detail with the help of exemplifying embodiments illustrated in the appended drawings in which FIG. 1 is an illustrative diagram of a system suited for implementing the invention; FIG. 2 is a graph illustrating the modulation of the signal emitted by the reader device in time plane; FIG. 3 is a functional block diagram of a transmitter according to the invention; and FIG. 4 is a diagram of an exemplary embodiment of a circuit according to the invention suited for generating clock pulses in a remote identification device from the modulated carrier signal of the reader device.

Referring to FIG. 1, a typical remote identification system shown therein comprises a reader device 10 and a remote identification device 20 arranged to communicate wirelessly with each other. Generally, reader device 10 includes a processor 11, a demodulator 12 and RF circuitry 13 with an antenna 14 for generating an RF signal and receiving the same. The remote identification device 20 respectively comprises an antenna 21, a matching circuit 22, a rectifier and detector circuit 23 and a logic circuit 24. The modulated signal is processed jointly by logic circuit 24 and matching circuit 22. The remote identification device 20 is typically constructed on a thin, laminated substrate, generally in a credit card size.

The output signal S(t) of a reader device according to the invention when a maximally wide modulation frequency that still remains within an allocated bandwidth B is represented in time plane by equation:

$$S(t) = A\cos(2\pi f_{rf}t)\cos(2\pi f_m t),$$

where A is the signal amplitude, $f_{rf}$ is the carrier frequency and $f_m$ is the modulation frequency. The maximum of the modulation frequency is $f_{m,max} = B/2$.

In FIG. 2 is shown the time relationship between the RF signal amplitude and phase when the modulation frequency is lower than B/2. The remote identification device generates its clock reference signal from either the amplitude or the phase modulation. As can be seen in the time-plane diagram, transmitted power level can be kept at the maximum permitted by authority regulations, with the exception of short low-power periods. The lower the modulation frequency, the longer are the full-power periods. Then, the average power level approaches the maximum permitted value.

A key feature of the invention is that the modulation signal shown in FIG. 2 is shaped such that the frequency and power level of the modulated carrier optimally utilize the allocated frequency band (e. g. 869.4 - 869. 65 MHz). In practice the carrier is modulated so that the carrier amplitude is kept at maximum permissible power level, while at given intervals the carrier amplitude is reduced and the carrier phase is reversed by about 180°.

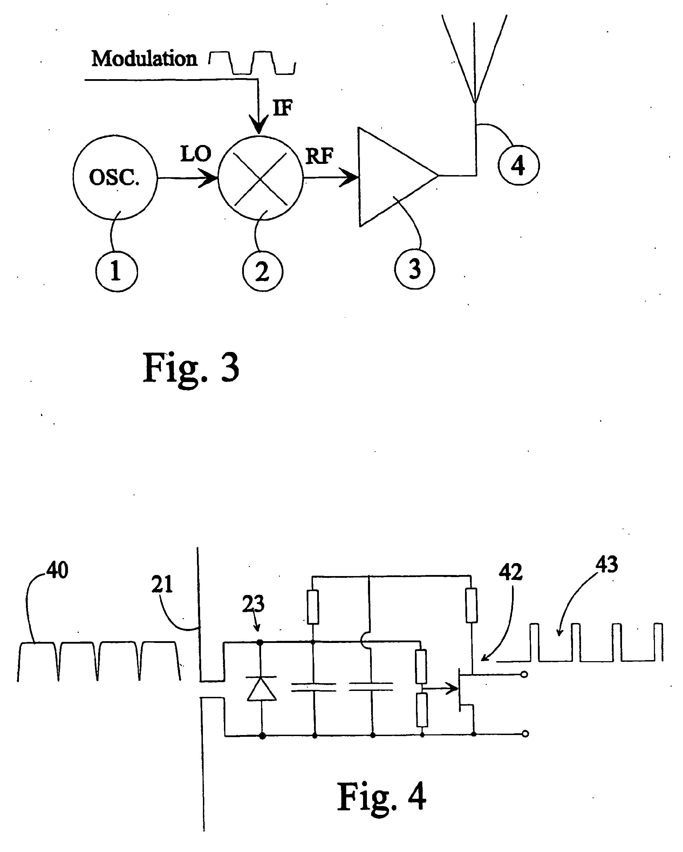

In FIG. 3 is shown the construction of a reader device comprising a transmitter formed by an oscillator 1, a mixer 2, an output amplifier 3 and an antenna 4 for signal transmission. The modulation frequency is mixed with the oscillator signal in mixer 2, whereby an RF signal is obtained for feeding the antenna.

In FIG. 4 is shown an exemplary embodiment of circuitry suited for rectifying and detecting in rectifier 23 the interrogation signal received by the remote identification device antenna 21. Leaving the rectifier/detector, the detected signal still contains the envelope shape of the received interrogation signal 40 as an AC component wherefrom the clock reference signal can be extracted by circuit 42. Thus, the signal taken to the transistor base is converted into clock signal 43.

In addition to remote identification devices, the above-described technique may also be employed in other remote identification components such as remote sensors.

In the context of this application, the term "reader" is used when reference is made to any device that can communicate with the remote identification device. Accordingly, typical reader devices are bus pass readers, tracking readers of supply chains, road tolling readers or, e. g. personal ID card readers.

**Claims**

1.   A method for implementing a remote identification system, the method comprising the steps of

   - sending with help of a reader device (10) a modulated carrier to a remote identification device or a remote sensor,
   - generating a clock signal synchronized with the modulation of the received carrier and a reply signal using the energy of the incident carrier signal by said identification device or a remote sensor;

**characterized in that**

the carrier signal is modulated to comprise a sequence of carrier signal portions of equal duration, a phase of each carrier signal portion being reversed by 180° with respect to a phase of the preceding carrier signal portion in the sequence of carrier signal portions, each carrier signal portion comprising an interval with reduced amplitude and an interval having a maximum permissible amplitude level, wherein the reduction of the carrier amplitude and the phase reversing by 180 degrees is at the same time.

2. The method of claim 1, **characterized in that** said modulation is accomplished by multiplying the carrier by a modulator.

3. The method of claim 1 or 2, **characterized in that** said modulation is accomplished by means of a mixer (2).

4. The method according to one of claim 1 to 3, **characterized in that** a clock reference signal is extracted in the remote identification device from the received modulated carrier, called interrogation signal.

**Patentansprüche**

1. Ein Verfahren zum Betrieb eines Fernidentifizierungssystems, wobei das Verfahren die folgenden Schritte umfasst:

    - Aussenden eines modulierten Trägers zu einem Fernidentifizierungsgerät oder Fernsensor mittels eines Lesegeräts (10),
    - Erzeugen eines mit der Modulation des empfangenen Trägers synchronisierten Taktsignals und eines Antwortsignals, wobei die Energie des einfallenden Trägersignals vom besagten Identifizierungsgerät oder einem Fernsensor verwendet wird;

    **dadurch gekennzeichnet, dass**

    das Trägersignal moduliert wird, um eine Folge von Trägersignalabschnitten gleicher Dauer einzuschließen, wobei in der Folge der Trägersignalabschnitte eine Phase von jedem Trägersignalabschnitt um 180° relativ zu einer Phase des vorhergehenden Trägersignalabschnitts umgekehrt wird, jeder Trägersignalabschnitt ein Intervall mit reduzierter Amplitude und ein Intervall mit maximal zulässiger Amplitudenhöhe einschließt, wobei die Reduzierung der Trägeramplitude und die Phasenumkehrung um 180 Grad gleichzeitig stattfindet.

2. Ein Verfahren nach Anspruch 1, **dadurch gekenn-** zeichnet, dass die besagte Modulation durch Multiplikation des Trägers durch einen Modulator ausgeführt wird.

3. Ein Verfahren nach Anspruch 1 oder 2, **dadurch gekennzeichnet, dass** die besagte Modulation mittels eines Mischers (2) ausgeführt wird.

4. Ein Verfahren nach einem der Ansprüche 1 bis 3, **dadurch gekennzeichnet, dass** ein Taktreferenzsignal im Fernidentifizierungsgerät vom empfangenen als Abfragesignal bezeichneten modulierten Träger abgeleitet wird.

**Revendications**

1. Procédé pour la mise en oeuvre d'un système d'identification à distance, le procédé comprenant les étapes suivantes :

    - transmission à l'aide d'un dispositif lecteur (10) d'une porteuse modulée vers un dispositif d'identification à distance ou un télédétecteur,
    - génération d'un signal d'horloge synchronisé avec la modulation de la porteuse reçue et d'un signal de réponse utilisant l'énergie du signal porteur incident par ledit dispositif d'identification ou le télédétecteur ;

    **caractérisé en ce que** le signal porteur est modulé pour comporter une séquence de segments de signal porteur de durées égales, une phase de chaque segment de signal porteur étant inversée de 180 degrés par rapport à la phase du segment de signal porteur précédent dans la séquence des segments de signal porteur, chaque segment de signal porteur comprenant un intervalle d'amplitude réduite et un intervalle présentant le niveau d'amplitude maximum admissible, dans lequel la réduction de l'amplitude de la porteuse et l'inversion de la phase de 180 degrés sont simultanées.

2. Procédé selon la revendication 1, **caractérisé en ce que** ladite modulation est réalisée en multipliant la porteuse par un modulateur.

3. Procédé selon la revendication 1 ou 2, **caractérisé en ce que** ladite modulation est réalisée au moyen d'un mélangeur.

4. Procédé selon l'une quelconque des revendications 1 à 3, **caractérisé en ce qu'**un signal de référence d'horloge est extrait dans le dispositif d'identification à distance à partir de la porteuse modulée reçue, dénommé signal d'interrogation.

READER

10

20

RFID device

LAMINATE

Processor 11

Demodulator 12

RF electronics 13

14

Antenna

21

Matching circuit

Rectifier and detector

Logic circuitry

## Fig. 1

AMPLITUDE

$T_n$      $T_c$

PHASE                                          Time

0°

-180°

## Fig. 2

**Fig. 3**

**Fig. 4**

**EP 1 433 264 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2308947 A
- US 5912632 A
- EP 0853392 A
- US 6282407 B1